# EUROPEAN PATENT APPLICATION

(11) **EP 0 832 695 A2**
(43) Date of publication of application: **01.04.1998**
(21) Application number: 97307335.6
(22) Date of filing: 19.09.1997
(51) Int. Cl.: B05B 5/16, A23P 1/08

(54) **An electrostratic flavouring system**

(30) Priority: 27.09.1996 GB 9620228
(71) Applicant: ITW Limited, Swansea SA5 4YE (GB)
(72) Inventor: Lush, Alan Charles, Farnborough, Hampshire (GB)
(74) Representative: Pedder, James Cuthbert

(57) **Abstract**

An electrostatic flavouring system comprises a hopper (1) for receiving a flavouring material from a supply (3, 4). An injector (8) is connected to the outlet of the hopper (1) and an electrostatic spray gun (2) is connected via a hose (11) to the injector (8). Two air feed means (12, 13) are provided for feeding air to the injector (8), the first air means (12) providing air at conveying pressure and the second air means (13) providing air at a higher pressure for the purpose of purging the injector (8) and/or the hose (11) and/or the electrostatic gun (2).

## Description

This invention relates to an electrostatic flavouring system and is an improvement in our co-pending application no GB 2277469A.

In that application, there is described an electrostatic system for power coating products comprising a container for the powder, a pump unit for pumping powder from the container to an electrostatic powder gun under the control of a powder gun control unit in which a venturi and hose rinsing pulsation control is connected through a venturi to a hose leading to the powder gun to purge any build up of powder in the venturi, hose or powder gun.

A number of electrostatic apparatuses are known for coating food products, such as snacks, with powdered flavouring. The powdered flavouring may contain dispersed oil or it may be formed with animal fats such as cheese. This has the disadvantage that the oil or fat may build up in the system tubes and the electrostatic gun with the result that agglomerations of powder may become dislodged and caused to adhere to the food snacks in lumps resulting in unpleasant concentrations of the flavouring powder on the food snacks and consequent adverse customer reaction. To prevent this, the system requires regular cleaning and maintenance, particularly when changing the powdered flavouring to provide a different flavoured coating.

The present invention seeks to provide an improved electrostatic system which assists in the free flow of powder through the system.

According to the invention, there is provided an electrostatic flavouring system comprising a hopper for receiving a flavouring material from a supply, an injector connected to the outlet of the hopper, an electrostatic spray gun connected via a hose to the injector and two air feed means for feeding air to the injector, the first air means providing air at conveying pressure and the second air means providing air at a higher pressure for the purpose of purging the injector and/or the hose and/or the electrostatic gun.

Preferably, both air feed means feed into a single inlet in the injector. One or both of the air feeds means may have a non return valve.

A vibrator may be clamped to the hopper or the hopper may be connected to a support arm through a vibrator.

A screw feeder may be arranged to feed the flavouring material into the upper part of the hopper.

The invention will now be described in greater detail, by way of example, with reference to the drawings, in which:-
Figure 1 is a diagrammatic cross-sectional view of one form of the electrostatic flavouring system according to the invention, and
Figure 2 is a fragmentary cross-sectional view of a modified feed system.

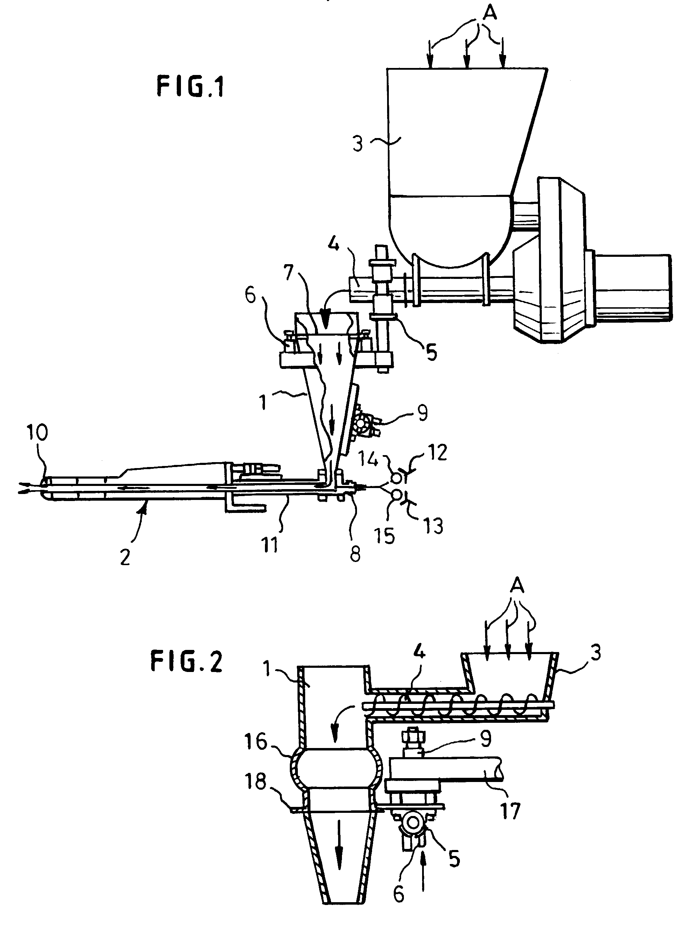

Referring firstly to figure 1, a feed hopper 3 is provided for receiving flavouring powder in the direction A. Powder from this feed hopper 3 is fed at a metered rate by means of a screw feeder 4 into which the outlet from the feed hopper 3 feeds.

The outlet of the screw feeder 4 feeds into a dispersion hopper 1, suitably mounted directly on to the screw feeder 4 by suitable clamping means indicated at 5, the clamping means preferably being of a vibration insulating type to minimize the transmission of vibrations from the dispersion hopper 1.

The flavouring powder from the screw feeder 4 passes into the dispersion hopper 1 by way of a sieving grid 7 which breaks up any conglomerations of the flavouring powder which might otherwise enter the dispersion hopper 1. An injector 8 is located at the outlet of the dispersion hopper 1 and is connected thereto for injecting the flavouring powder into an air circuit including a flexible delivery hose 11 and an electrostatic gun 2. When the flavouring particles arrive at the gun 2, they pass over an electrode 10 so that an electrostatic charge is applied to the particles in a well known way.

The screw feeder 4 is normally linked to the product line so as to have its rotational speed controlled to provide a flow rate suitable to the electrostatic gun 2. This eliminates the need to vary the injector 8 conveying air pressure during operation so as to adjust the supply of flavouring material to the speed of the product line and enables the injector conveying air pressure to be adjusted to optimum pressure to prevent build up of powder in the hopper 1 and to maintain optimum conveying velocities therethrough the delivery hose 11 and the electrostatic gun 2.

The dispersion hopper together with the sieving grid 7 and injector 8 are vibrated by an air fed vibrator 9 so that free flow of the flavouring powder through the sieving grid 7 and through the dispersion hopper 1 and injector 8 is enhanced.

The injector 8 is connected to dual air inputs 12 and 13 through non return valves 14 and 15. The air input 13 provides air a conveying pressure for conveying the flavouring powder to the electrostatic gun 2. The air input 13 provides an intermittent air pulses of higher pressure than the conveying pressure for purging purposes under the control of a cyclic timer (not sown) . Typically, the inlet 13 would be set to provide short air purges through the injector 8, hose 11 and gun 2 at seven to ten second intervals but the frequency and duration of the pulses can be set to any desired rates in dependence on the characteristics of the powder being used.

A modification of the powder flavouring system of figure 1 is shown in figure 2. In this modification, the screw feeder 4 providing outlet from the feed hopper 3 is connected directly into the side wall of the dispersion hopper 1. Because of this direct connection between the feeder 4 and the hopper 1, the hopper 1 is provided with a flexible bellows portion 16 for insulating the upper part of the dispersion hopper 1, and thus the feeder 4 from vibration of the lower part of the hopper 1.

The dispersion hopper 1 is carried by a support arm 17 by way of a flange 18 connected to the vibrator 9 which is in turn carried by the support 17.

## Claims

1. An electrostatic flavouring system comprising a hopper (1) for receiving a flavouring material from a supply (3, 4), an injector (8) connected to the outlet of the hopper (1), an electrostatic spray gun (2) connected via a hose (11) to the injector (8) and two air feed means (12, 13) for feeding air to the injector (8), the first air means (12) providing air at conveying pressure and the second air means (13) providing air at a higher pressure for the purpose of purging the injector (8) and/or the hose (11) and/or the electrostatic gun (2).

2. A system as claimed in claim 1, characterized in that both air feed means (12, 13) feed into a single inlet in the injector (8).

3. A system as claimed in claim 1 or 2, characterized in that one or both of the air feeds means (12, 13) has a non return valve (14, 15).

4. A system as claimed in claim 1, 2 or 3, characterized by a vibrator (9) clamped to the hopper (1).

5. A system as claimed in claim 1, 2 or 3, characterized by a vibrator (9) through which the hopper (1) is connected to a support arm (17).

6. A system as claimed in any preceding claim, characterized in that a screw feeder (4) is arranged to feed the flavouring material into the upper part of the hopper (1).

7. A system as claimed in claim 6, characterized in that the screw feeder (4) is connected directly into the side of the hopper (1).

8. A system as claimed in claim 6 or 7, characterized in that a sieving grid (7) is located in the inlet path of the flavouring material into the hopper (1).

9. A system as claimed in any one of claims 6 to 8, characterized in that control means are provided for adjusting the speed of rotation of the screw feeder in relation to the flavouring material used.
